(19) Europäisches Patentamt
European Patent Office
Office européen des brevets

(11) **EP 4 759 408 A1**

(12) **EUROPEAN PATENT APPLICATION**
published in accordance with Art. 153(4) EPC

(43) Date of publication:
**17.06.2026 Bulletin 2026/25**

(21) Application number: **24872312.4**

(22) Date of filing: **25.09.2024**

(51) International Patent Classification (IPC):
**B01J 35/39** (2024.01)     **B01J 23/89** (2006.01)
**B01J 23/94** (2006.01)     **B01J 23/96** (2006.01)
**B01J 23/843** (2006.01)     **B01J 37/02** (2006.01)
**B01J 37/10** (2006.01)     **B01J 38/72** (2006.01)

(52) Cooperative Patent Classification (CPC):
**B01J 23/843; B01J 23/89; B01J 23/94;**
**B01J 23/96; B01J 35/39; B01J 37/02; B01J 37/10;**
**B01J 38/72**

(86) International application number:
**PCT/JP2024/034249**

(87) International publication number:
**WO 2025/070526 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023170490**

(71) Applicants:
• **SUMITOMO CHEMICAL COMPANY, LIMITED**
**Tokyo 103-6020 (JP)**
• **Institute of Science Tokyo**
**Tokyo 152-8550 (JP)**

(72) Inventors:
• **CHANG, Tso-Fu Mark**
**Tokyo 152-8550 (JP)**
• **OKAMOTO, Satoshi**
**Tokyo 152-8550 (JP)**
• **SONE, Masato**
**Tokyo 152-8550 (JP)**
• **HSU, Yung-Jung**
**Tokyo 152-8550 (JP)**

(74) Representative: **J A Kemp LLP**
**80 Turnmill Street**
**London EC1M 5QU (GB)**

(54) **PHOTOCATALYST PARTICLES, METHOD FOR PRODUCING PHOTOCATALYST PARTICLES, AND METHOD FOR RECOVERING PHOTOCATALYST PARTICLES**

(57) The photocatalyst particles are photocatalyst particles including polycrystalline particles of an oxide selected from the group consisting of $MFeO_3$, $M_2Fe_4O_9$, and $M_{25}FeO_{39}$ (wherein M is at least one selected from the group consisting of Bi, Ga, Ni, Co, and Zn). The coefficient of variation of the aspect ratio of the crystal grains constituting the polycrystalline particles is 0.35 to 1.0.

**Fig.3**

$BiFeO_3$ OF EXAMPLE 1

**EP 4 759 408 A1**

## Description

### Technical Field

The present invention relates to photocatalyst particles, a method for producing photocatalyst particles, and a method for recovering photocatalyst particles.

### Background Art

In recent years, the use and development of photocatalytic activity have been actively conducted. When the photocatalyst particles are irradiated with light, decomposition and purification of harmful substances, deodorization of malodorous gases, sterilization of bacteria, and the like are performed by the oxidizing power of holes and the strong reducing power of electrons, which are generated by photoexcitation, and the photocatalyst particles can be used for environmental purification.

In Patent Literatures 1 to 4, an oxide containing Bi as a photocatalyst is disclosed.

### Citation List

### Patent Literature

Patent Literature 1: CN104646001
Patent Literature 2: CN104941662
Patent Literature 3: CN106807400
Patent Literature 4: CN108114736

### Summary of Invention

### Technical Problem

An object of the present invention is to provide novel photocatalyst particles, a method for producing the same, and a method for recovering the same.

### Solution to Problem

[1] Photocatalyst particles including polycrystalline particles of an oxide selected from the group consisting of $MFeO_3$, $M_2Fe_4O_9$, and $M_{25}FeO_{39}$ (wherein M is at least one selected from the group consisting of Bi, Ga, Ni, Co, and Zn), wherein
a coefficient of variation of an aspect ratio of crystal grains constituting the polycrystalline particles is 0.35 to 1.0.
[2] The photocatalyst particles according to [1], wherein a coefficient of variation of a particle size of the crystal grains is 0.35 to 1.0.
[3] The photocatalyst particles according to [1] or [2], wherein an arithmetic average of the aspect ratio of the crystal grains is 1.90 to 10.0.
[4] The photocatalyst particles according to any one of [1] to [3], further including metal particles of at least one selected from the group consisting of Au, Pd, Ag, and Pt, the metal particles being supported on a surface of the polycrystalline particles.
[5] A method for producing photocatalyst particles, including a step of heating a solution of a salt of at least one metal selected from the group consisting of Bi, Ga, Ni, Co, and Zn and a salt of Fe to obtain polycrystalline particles of an oxide selected from the group consisting of $MFeO_3$, $M_2Fe_4O_9$, and $M_{25}FeO_{39}$ (wherein M is at least one selected from the group consisting of Bi, Ga, Ni, Co, and Zn).
[6] The method according to [5], further including a step of supporting metal particles of at least one selected from the group consisting of Au, Pd, Ag, and Pt on a surface of the obtained polycrystalline particles.
[7] A method for recovering photocatalyst particles, including a step of recovering the photocatalyst particles from a composition containing the photocatalyst particles according to [1] or [2] with a magnet.

**Advantageous Effects of Invention**

According to the present invention, novel photocatalyst particles, a method for producing the same, and a method for recovering the same are provided.

**Brief Description of Drawings**

FIG. 1 shows an XRD chart of particles ($BiFeO_3$) obtained in Example 1.
FIG. 2 shows an XRD chart of particles ($Bi_2Fe_4O_9$) obtained in Example 2.
FIG. 3 shows an SEM image of particles ($BiFeO_3$) obtained in Example 1.
FIG. 4 shows an SEM image of particles ($Bi_2Fe_4O_9$) obtained in Example 2.
FIG. 5 shows an SEM image of particles ($BiFeO_3$) obtained in Comparative Example 1.
FIG. 6(a) shows optical absorption spectra of particles obtained in Examples 1 and 2. FIG. 6(b) shows an optical absorption spectrum of particles obtained in Comparative Example 1.
FIG. 7 shows primary reaction plots obtained by plotting methylene blue decoloring ability of a sample with respect to sampling time for Example 1 ($BiFeO_3$), Example 2 ($Bi_2Fe_4O_9$), a 1 : 1 mixture thereof, and Comparative Example 1 ($BiFeO_3$).
FIG. 8(a) is a J-H curve of Ni particles to be a reference, FIG. 8(b) is a J-H curve of $BiFeO_3$ particles of Example 1, FIG. 8(c) is a J-H curve of $Bi_2Fe_4O_9$ particles of Example 2, and FIG. 8(d) is a J-H curve of $BiFeO_3$ particles of Comparative Example 1.
FIG. 9 is a photograph after a droplet of water is dropped onto a $BiFeO_3$ particle layer of Example 1.
FIGS. 10(a) and 10(b) are, in order, photographs before and after a droplet of water is dropped onto a $Bi_2Fe_4O_9$ particle layer of Example 1.
FIG. 11(a) is a graph showing a histogram of an aspect ratio of crystal grains of polycrystalline particles of Example 1, and FIG. 11(b) is a graph showing a histogram of a particle size of crystal grains of polycrystalline particles of Example 1.
FIG. 12(a) is a graph showing a histogram of an aspect ratio of crystal grains of polycrystalline particles of Example 2, and FIG. 12(b) is a graph showing a histogram of a particle size of crystal grains of polycrystalline particles of Example 2.
FIG. 13(a) is a graph showing a histogram of an aspect ratio of crystal grains of polycrystalline particles of Comparative Example 1, and FIG. 13(b) is a graph showing a histogram of a particle size of crystal grains of polycrystalline particles of Comparative Example 1.
FIGS. 14(a), 14(b), and 14(c) show, in order, SEM images and results of elemental analysis in the cases where the Au loading amount of the $BiFeO_3$ polycrystalline particles supporting Au particles obtained in Example 3 is 0.6 wt%, 2.0 wt%, and 5.4 wt%, respectively.
FIG. 15 is a graph comparing the MB decomposition activities of $BiFeO_3$ polycrystalline particles of Example 1 supporting Au particles in the cases where the Au loading amount is 0.6 wt%, 2.0 wt%, and 5.4 wt% with that of $BiFeO_3$ particles of Example 1 in which the Au loading amount is 0.
FIG. 16(a) is a photograph showing a state in which $BiFeO_3$ polycrystalline particles of Example 1 supporting Au particles in air are attracted to a magnet, and FIG. 16(b) is a photograph showing a state in which $BiFeO_3$ polycrystalline particles of Example 1 supporting Au particles in water are attracted to a magnet.

**Description of Embodiments**

(Photocatalyst Particles)

The photocatalyst particles according to one embodiment are photocatalyst particles including polycrystalline particles of an oxide selected from the group consisting of $MFeO_3$, $M_2Fe_4O_9$, and $M_{25}FeO_{39}$ (wherein M is at least one selected from the group consisting of Bi, Ga, Ni, Co, and Zn).
In other words, the polycrystalline particles are formed of a large number of crystal grains of an oxide selected from the group consisting of $MFeO_3$, $M_2Fe_4O_9$, and $M_{25}FeO_{39}$. Grain boundaries are present between the crystal grains. In the SEM image, the presence of grain boundaries can be visually determined.
M preferably includes Bi. The atomic ratio of Bi in M is not particularly limited, but may account for 50% or more or 70% or more.

(Composition of Crystal grain)

The $MFeO_3$, $M_2Fe_4O_9$, or $M_{25}FeO_{39}$ of crystal grains may be doped with Ca or Dy.

(Aspect Ratio of Crystal grain)

The aspect ratio r of the crystal grain is defined as follows for each crystal grain observed in the SEM image of the polycrystalline particle.

$$r = \text{major axis of crystal grain/minor axis of crystal grain}$$

The major axis is a distance at which a distance between two straight lines becomes maximum when a crystal grain observed in the SEM image is sandwiched between the two straight lines parallel to each other. The minor axis is a distance at which a distance between two straight lines becomes minimum when a crystal grain observed in the SEM image is sandwiched between the two straight lines parallel to each other. The direction of the major axis and the direction of the minor axis are not necessarily orthogonal to each other.

The magnification of the SEM image is preferably set to such a degree that about 100 to 200 crystal grains are observed. The number of aspect ratios to be measured, that is, the number of crystal grains to be measured is preferably 100 to 500.

(Arithmetic Average of Aspect Ratios of Crystal Grains)

The arithmetic average $r_{av}$ of the aspect ratio r is defined as follows.

[Mathematical Formula 1]

$$r_{av} = \frac{1}{n} \sum_{i=1}^{n} r_i$$

The numerical range of the arithmetic average of the aspect ratios of the crystal grains is not particularly limited, but may be 1.90 or more, 2.00 or more, 2.30 or more, 10.0 or less, or 9.00 or less.

(Standard Deviation of Aspect Ratio of Crystal Grain)

The standard deviation $r_{sd}$ of the aspect ratio r of the crystal grain is defined as follows.

[Mathematical Formula 2]

$$r_{sd} = \sqrt{\frac{1}{n} \sum_{i=1}^{n} (r_i - r_{av})^2}$$

(Coefficient of Variation of Aspect Ratio of Crystal Grain)

The coefficient of variation of the aspect ratio of the crystal grain is defined as follows.

[Mathematical Formula 3]

$$r_{cv} = r_{sd}/r_{av}$$

In the present embodiment, the numerical range of the coefficient of variation of the aspect ratio of the crystal grain is 0.35 to 1.0.
The fact that the coefficient of variation of the aspect ratio of the crystal grain is 0.35 to 1.0 means that the variation of the aspect ratio of the crystal grain is large. The coefficient of variation of the aspect ratio of the crystal grain may be 0.40 or more, 0.45 or more, or 0.50 or more. The coefficient of variation of the aspect ratio of the crystal grain may be 0.95 or less, 0.90 or less, 0.85 or less, or 0.80 or less.

(Particle Size, Average Particle Size, Standard Deviation of Particle Size, and Coefficient of Variation of Particle Size of Crystal grains)

The particle size of the crystal grain is an arithmetic average of the major axis and the minor axis of the crystal grain in the SEM image.

The average particle size of the crystal grains is an arithmetic average of particle sizes of 100 or more crystal grains.

The coefficient of variation of the particle size of the crystal grain is defined by the standard deviation of the particle size of the crystal grain/the average particle size of the crystal grains.

The average particle size of the crystal grains is not particularly limited, and may be, for example, 1 to 1000 nm. The average particle size of the crystal grains may be 2 nm or more, 5 nm or more, 10 nm or more, 20 nm or more, 50 nm or more, 100 nm or more, 150 nm or more, 200 nm or more, 900 nm or less, 800 nm or less, 700 nm or less, 600 nm or less, 500 nm or less, or 400 nm or less.

The coefficient of variation of the particle size of the crystal grain is not particularly limited, but is preferably, for example, 0.35 to 1.0. The coefficient of variation may be 0.30 or more, or 0.40 or more.

(Shape of Crystal Grain)

The shape of the crystal grain is not particularly limited, and may be, for example, a spherical shape, a rod shape, a flake shape, a flower shape, an irregular shape, or the like, and may include a combination of any two or more thereof.

(Average Particle Size of Polycrystalline Particles)

The polycrystalline particles are formed of a large number of crystal grains of an oxide selected from the group consisting of $MFeO_3$, $M_2Fe_4O_9$, and $M_{25}FeO_{39}$.

The particle size of the polycrystalline particle as a secondary particle (aggregate) is not particularly limited, and may be, for example, 1 $\mu$m or more and 10 $\mu$m or less.

In the present specification, the particle size of the polycrystalline particle is an arithmetic average of the major axis and the minor axis of the polycrystalline particle in the SEM image. The average particle size of the polycrystalline particles is an arithmetic average of particle sizes of 100 or more polycrystalline particles.

(Support of Co-catalyst)

The photocatalyst particles may have metal particles supported on the surface of the polycrystalline particles. The metal in the metal particles may be any selected from the group consisting of Au, Pd, Ag, and Pt, or an alloy of any combination thereof. The surface of the metal particle may be covered with an oxide such as silica. Such a structure is called a core-shell structure. Examples of the metal particles having a core-shell structure include Au core-silica shell particles and Ag core-silica shell particles.

The average particle size of the metal particles is not limited, but may be 1 to 10 nm. The particle size of the metal particle is an arithmetic average of the major axis and the minor axis of the particle in the SEM image. The average particle size of the metal particles is an arithmetic average of particle sizes of 100 or more particles.

The loading amount of the metal particles serving as a co-catalyst is not particularly limited, but for example, the loading amount of the metal particles can be 0.2 to 10 mass% with respect to the total mass of the polycrystalline particles and the metal particles.

(Ferromagnetism)

The polycrystalline particles according to the present embodiment are ferromagnetic. Ferromagnetism means that a J-H curve (magnetization-external magnetic field curve) obtained by VSM measurement or the like shows a loop having hysteresis. The coercive force HcJ of the polycrystalline particles may be 1 kOe or more.

(Ferroelectricity)

The polycrystalline particles according to the present embodiment exhibit ferroelectricity in addition to ferromagnetism. Ferroelectricity means that an electric field-polarization curve shows a loop having hysteresis. The coercive field of the polycrystalline particles may be 1 kV/mm or more.

(Band Gap)

The polycrystalline particles according to the present embodiment may have a band gap at 1.0 to 3.5 eV.

(Mechanism of Action)

When the photocatalyst particles according to the present embodiment are applied with ultrasonic waves or irradiated with ultraviolet light or visible light, excited species such as OH radicals are generated, so that harmful substances such as organic compounds as components of stains can be decomposed. In particular, in the present embodiment, it is considered that, from the fact that it is a polycrystalline particle of a specific metal oxide, and the coefficient of variation of the aspect ratio of the crystal grain and the like are appropriately controlled, a situation of widening the band gap is caused, and it is possible to increase the activity as a photocatalyst.

In addition, since the polycrystalline particles have ferromagnetism and ferroelectricity, there is an effect of suppressing recombination of carriers and holes, which enhances the photocatalytic effect.

The photocatalyst according to the present embodiment can be fixed to a surface of a base material such as metal, tile, enamel, cement, concrete, glass, fiber, wood, paper, or plastic, and subjected to a photocatalytic reaction.

As the fixing means, it is possible to use a conventional method such as a method of sintering the photocatalyst or a method of using a binder. In addition, a binder is mixed with the photocatalyst particles as necessary, and the mixture is formed into a flat plate shape, a wave plate shape, a honeycomb shape, a spherical shape, a curved shape, or the like, and subjected to a photocatalytic reaction.

(Method for Producing Photocatalyst Particles)

A method for producing the photocatalyst particles according to one embodiment will be described.

The method for producing photocatalyst particles according to the present embodiment includes a step of heating a solution of a salt $\alpha$ of at least one metal selected from the group consisting of Bi, Ga, Ni, Co, and Zn and a salt $\beta$ of Fe to obtain polycrystalline particles of an oxide selected from the group consisting of $MFeO_3$, $M_2Fe_4O_9$, and $M_{25}FeO_{39}$ (wherein M is at least one selected from the group consisting of Bi, Ga, Ni, Co, and Zn). This step may be referred to as solvothermal synthesis.

As the solvent, it is possible to use water, ethylene glycol, or the like, and in particular, a so-called hydrothermal synthesis using water as the solvent is suitable.

The metal salt $\alpha$ and the metal salt $\beta$ are not particularly limited, and each independently may be a nitrate, a sulfate, a hydrogen sulfate, an acetate, a chloride, a phosphate, a hydrogen phosphate, a hydrogen carbonate, a carbonate, or the like, but it is preferable that both the metal salt $\alpha$ and the metal salt $\beta$ are nitrates.

When $MFeO_3$, $M_2Fe_4O_9$, and $M_{25}FeO_{39}$ are selectively produced, the atomic ratios of M to Fe may be 1 : 1, 2 : 4, and 25 : 1, respectively.

In this step, first, a solution before heating is prepared.

Specifically, the metal salt $\alpha$ and the metal salt $\beta$ are sufficiently dissolved in a solvent such as water. From the viewpoint of sufficiently dissolving the metal salts $\alpha$ and $\beta$ in the solvent, the pH of the solvent at the time of dissolution is preferably 3 to 4 by addition of an acid such as nitric acid. It is preferable to appropriately perform stirring for sufficient dissolution.

From the viewpoint of suitably controlling the coefficient of variation of the aspect ratio of the crystal grain and the like, it is preferable to increase the pH of the solution to 12 or more by adding a base such as KOH to the solution after dissolving the metal salts $\alpha$ and $\beta$ in the solvent and before heating to be described later.

The solvent after addition of the base or before addition of the base may further contain a compound that generates an acid, a base, or the like when heated in the subsequent step. An example of such a compound is urea, and urea can produce $NH_4$ and carbon dioxide by heating to further increase the pH of the solution.

Subsequently, the resulting solution is heated. The heating temperature is not particularly limited, but is preferably 130°C or higher and preferably 250°C or lower from the viewpoint of suitably controlling the coefficient of variation of the aspect ratio of the crystal grain. The temperature is suitably below the critical temperature of the solvent.

The pressure during heating is preferably a pressure at which the solvent can be maintained in a liquid state during heating. Usually, by heating the solvent to the above temperature in a sealed container such as an autoclave, a pressurized state corresponding to the temperature is obtained by saturated vapor of the solvent.

The heating time is not particularly limited, but may be 60 minutes to 48 hours.

After the heating, the solvent containing a solid is cooled to room temperature, then subjected to solid-liquid separation by centrifugation or the like, and the solid is washed with ethanol, water or the like as necessary and dried, whereby polycrystalline particles of an oxide selected from the group consisting of $MFeO_3$, $M_2Fe_4O_9$, and $M_{25}FeO_{39}$ can be obtained.

(Support of Co-catalyst)

If necessary, metal particles or metal oxide particles functioning as a co-catalyst can be supported on the surface of the obtained polycrystalline particles.

In a case where the metal particles are supported on the surface of the polycrystalline particles, for example, the polycrystalline particles are dispersed in a solvent in which a metal salt is dissolved, and then a reducing agent is added to the solution to precipitate metal particles on the surface of the polycrystalline particles. An example of the reducing agent is ethanol.

In a case where the metal oxide particles are supported on the surface of the polycrystalline particles, for example, the polycrystalline particles may be dispersed in a solvent in which an organometallic compound such as TEOS is dissolved, and then the metal oxide particles may be precipitated on the surface of the polycrystalline particles by adjusting the pH of the solution, heating and drying, or the like.

(Method for Recovering Photocatalyst Particles)

The method for recovering photocatalyst particles according to the present embodiment includes a step of recovering photocatalyst particles from a composition containing the above photocatalyst particles with a magnet.

The photocatalyst particles according to the present embodiment have ferromagnetism, and thus can be separated by being attracted by a magnet. As compared with photocatalyst particles such as titanium oxide, recovery from a waste of a photocatalytic product is easy.

Specifically, it is possible to use in the case of separating polycrystalline particles from a composition containing the polycrystalline particles and a solvent after synthesis of the polycrystalline particles, in the case of separating co-catalyst-supported polycrystalline particles from a composition containing the co-catalyst-supported crystal grains and a solvent after supporting the co-catalyst on the polycrystalline particles, and in the case of recovering photocatalyst particles after putting photocatalyst particles into wastewater to decompose environmental contaminants and the like.

**Examples**

(Chemicals Used)

Bismuth nitrate ($Bi(NO_3)_3 \cdot 5H_2O$, 98%), iron nitrate ($Fe(NO_3)_3 \cdot 9H_2O$, 98%), methanol (98%), tetrachloroauric (III) acid trihydrate ($HAuCl_4 \cdot 3H_2O$, 99.5%), aqueous nitric acid ($HNO_3$, 65%) solution and methylene blue (MB, $\geq$ 95%) were all obtained from Sigma-Aldrich. Potassium hydroxide (KOH, 85%) and urea (99.5%) were purchased from KANTO CHEMICAL CO., INC., all reagents were utilized as received, and deionized water (Milipore System, 18.2 $\Omega$) was utilized as a solvent.

(Example 1) Preparation of $BiFeO_3$ Polycrystalline Particles

In the case of $BiFeO_3$, 0.005 mol of $Bi(NO_3)_3 \cdot 5H_2O$, 0.005 mol of $Fe(NO_3)_3 \cdot 9H_2O$, 0.05 mol of urea, and 2 mL of $HNO_3$ were mixed, and deionized water was added to make 20 ml. Stirring was continuously performed until all chemicals were completely dissolved. Subsequently, the homogenized solution was mixed with 60 mL of 14M aqueous KOH solution. The resulting mixture was transferred to an autoclave reactor whose internal surface was coated with polytetrafluoroethylene, and heated at 180°C for 24 hours. After cooling to room temperature, the resulting product was centrifuged, then washed with ethanol and deionized water, and finally dried in an oven at 80°C to obtain $BiFeO_3$ particles of Example 1.

(Comparative Example 1) Preparation of $BiFeO_3$ Polycrystalline Particles

$BiFeO_3$ particles of Comparative Example 1 were obtained in the same manner as in Example 1 except that the reaction in the autoclave was performed by heating at 125°C for 24 hours.

(Example 2) Preparation of $Bi_2Fe_4O_9$ Polycrystalline Particles

In the case of $Bi_2Fe_4O_9$, 0.006 mol of $Bi(NO_3)_3 \cdot 5H_2O$, 0.006 mol of $Fe(NO_3)_3 \cdot 9H_2O$, 0.1 mol of urea, and 2 mL of

HNO$_3$ were mixed, and deionized water was added to make 20 ml. Stirring was continuously performed until all chemicals were completely dissolved. Subsequently, the homogenized solution was mixed with 60 mL of 10M aqueous KOH solution. The resulting mixture was transferred to an autoclave reactor whose internal surface was coated with polytetrafluoroethylene, and heated at 200°C for 12 hours. After cooling to room temperature, the resulting product was centrifuged, then washed with ethanol and deionized water, and finally dried in an oven at 80°C to obtain particles.

[XRD Measurement]

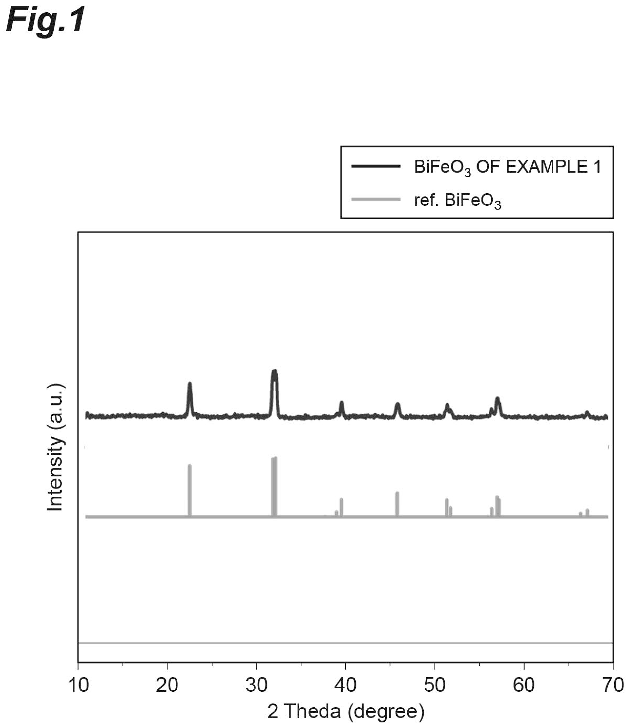

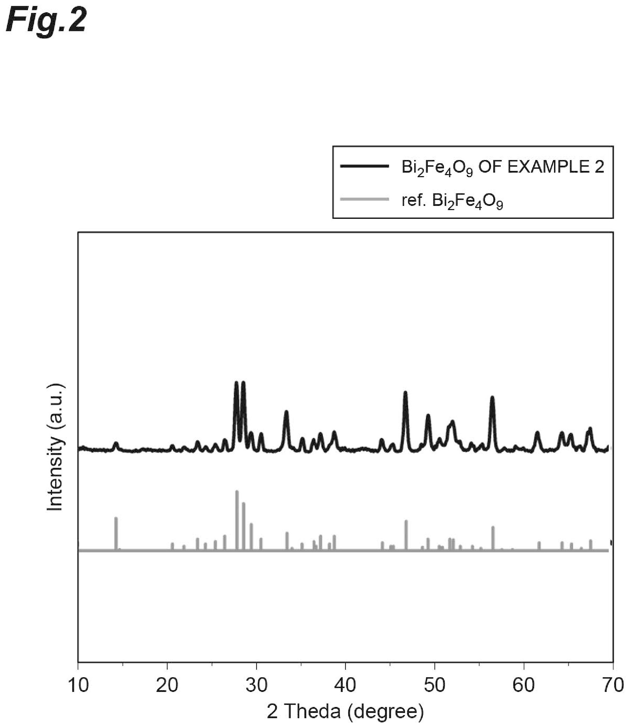

XRD charts obtained by performing XRD measurement on the particles (BiFeO$_3$) obtained in Example 1 and (Bi$_2$Fe$_4$O$_9$) obtained in Example 2 under the following conditions are shown in FIGS. 1 and 2.

    Equipment used: MiniFlex manufactured by Rigaku Corporation
    Method: $\theta$-$\theta$ reflection method
    X-ray used: Cu-K$\alpha$ ray
    Scan speed: 1.00°/min
    Sampling interval: 0.10°
    Slit width: DS: (variable), SS: 4,2°, RS: 0.3 mm

From the XRD chart of FIG. 1, it was found that the particles synthesized in Example 1 were BiFeO$_3$. It was found by the same measurement that the particles synthesized in Comparative Example 1 were also BiFeO$_3$.
From the XRD chart of FIG. 2, it was found that the particles synthesized in Example 2 were Bi$_2$Fe$_4$O$_9$.

[SEM Observation]

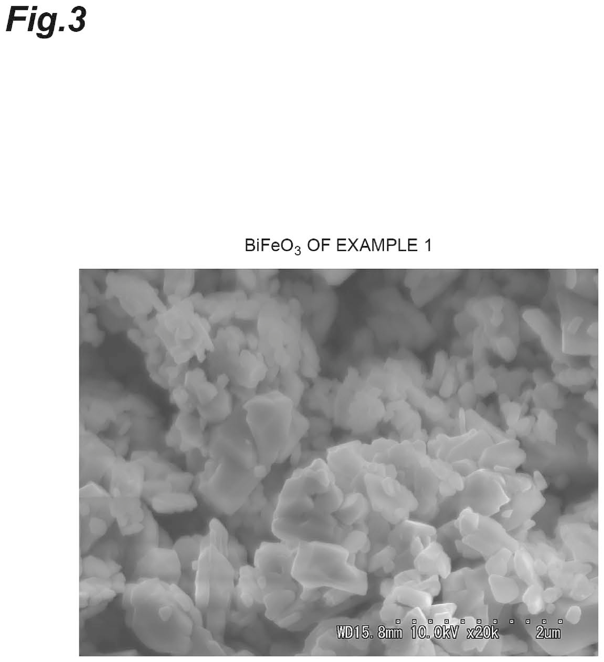

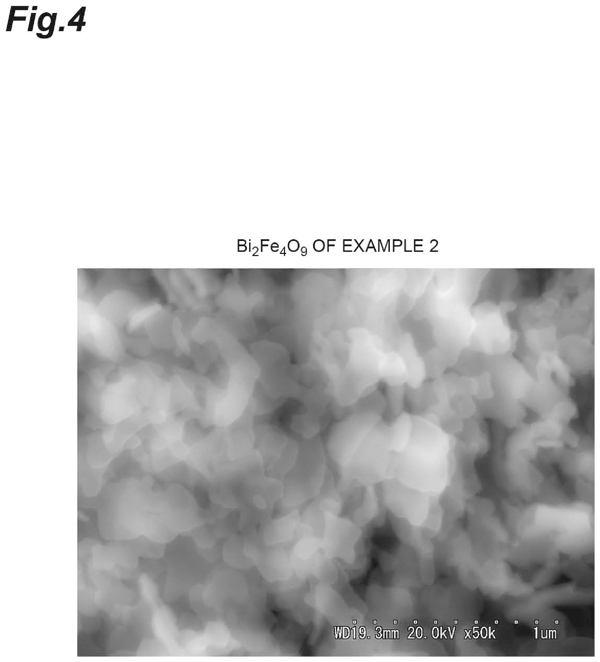

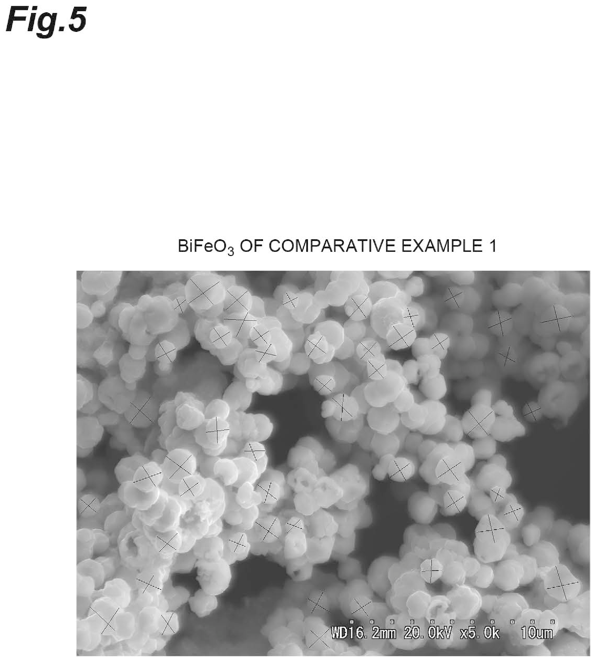

FIGS. 3 and 4 show SEM photographs of the particles obtained in Examples 1 and 2. An SEM photograph of the particles obtained in Comparative Example 1 is shown in FIG. 5. It was confirmed that the sample synthesized in Example 1 was polycrystalline particles with a secondary particle size of about 1 to 10 $\mu$m, and that the crystal grains were nanoparticles with a particle size of 1 to 1,000 nm. It was confirmed that the sample synthesized in Example 2 was polycrystalline particles with a secondary particle size of about 1 to 10 $\mu$m, and that the crystal grains were nanoparticles with a particle size of 1 to 1,000 nm. It was confirmed that the sample synthesized in Comparative Example 1 was polycrystalline particles with a secondary particle size of about 1 to 10 $\mu$m, and that the crystal grain were particles with a particle size of _500 to 2000 nm.

[Optical Absorption Spectrum Measurement]

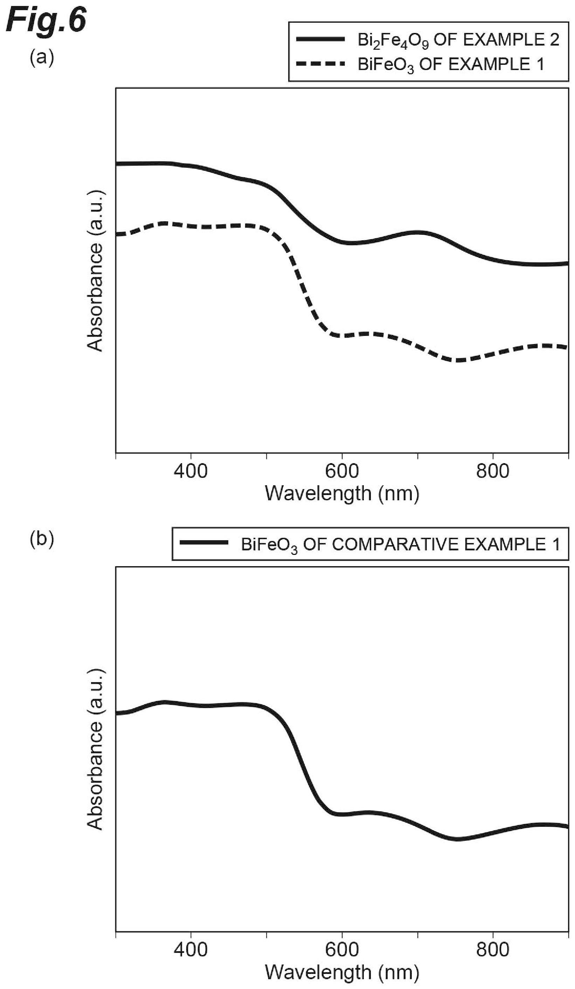

Optical absorption spectra of the particles obtained in Examples 1 and 2 are shown in (a) of FIG. 6. It was confirmed that the band gap of the sample synthesized in Example 1 was 2.0 to 2.5 eV. It was confirmed that the band gaps of the sample synthesized in Example 2 were 1.53 eV and 2.05 eV. It was confirmed that the photocatalyst particles can absorb visible light.
An optical absorption spectrum of the particles obtained in Comparative Example 1 is shown in (b) of FIG. 6. It was confirmed that the band gap of the sample synthesized in Comparative Example 1 was 2.0 eV to 2.2 eV.

(Confirmation of Photocatalytic Activity)

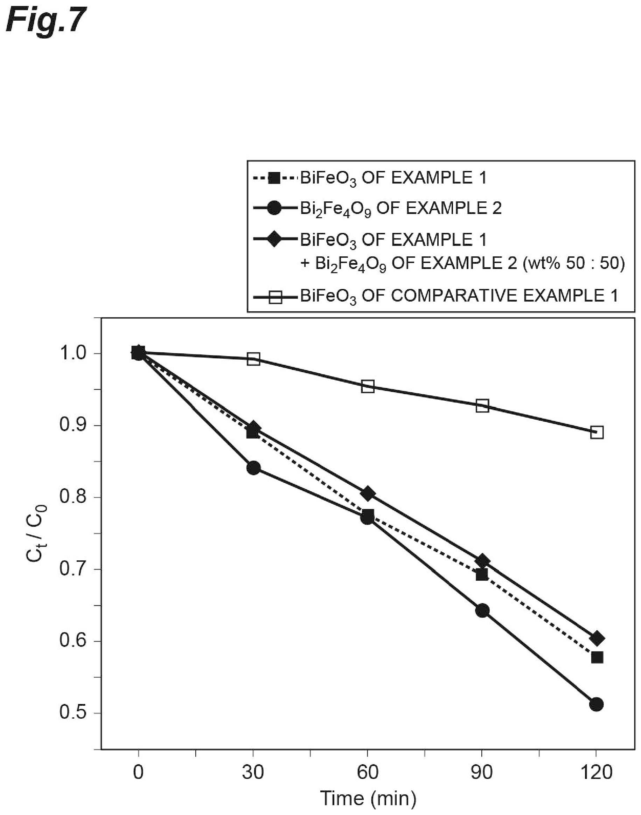

In order to evaluate the photocatalytic performance under visible light in the photolysis of methylene blue (MB), MB was used as a test contaminant. In a typical procedure, 30 mg of sample was immersed in an aqueous MB solution (20 mL, 20 $\mu$M) in a quartz tube. After achieving the adsorption-desorption equilibrium in the dark for 120 minutes, the reaction solution was irradiated with white light by a xenon lamp (LCS-100, 94011A, Newport) operated at 500 mW/cm$^2$ to perform a photolysis experiment of MB. At specified time intervals, 0.2 mL of the reaction solution was extracted and centrifuged to remove all solid particles dispersed in the solution. To determine the MB concentration in the reaction solution, the absorbance of the reaction solution at $\lambda$ = 664 nm was obtained with a UV-vis spectrometer (PD-3000UVe, Apel).
Primary reaction plots obtained by plotting methylene blue decoloring ability of a sample with respect to sampling time for Example 1 (BiFeO$_3$), Example 2 (Bi$_2$Fe$_4$O$_9$), a 1 : 1 mixture thereof, and Comparative Example 1 (BiFeO$_3$) are shown in FIG. 7. It was found that all of BiFeO$_3$ of Example 1, Bi$_2$Fe$_4$O$_9$ of Example 2, and the mixture of BiFeO$_3$ of Example 1 and Bi$_2$Fe$_4$O$_9$ of Example 2 at a 1 : 1 weight ratio exhibited photocatalytic activity. On the other hand, the photocatalytic activity of BiFeO$_3$ of Comparative Example 1 was low.

(Confirmation of Magnetic Properties of Particles)

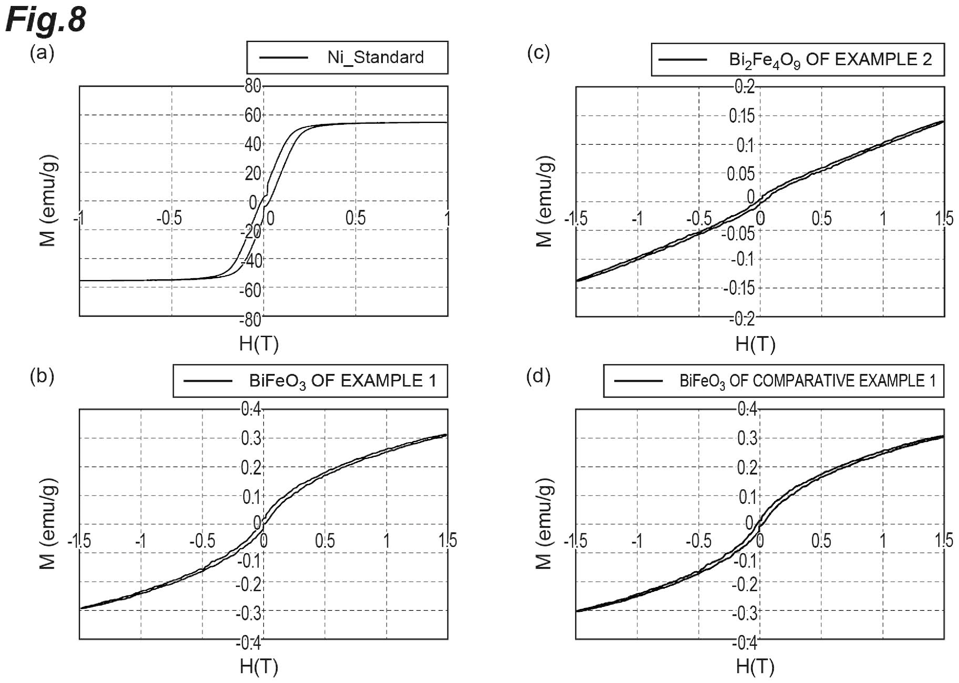

The magnetic properties of the particles were evaluated with a vibrating sample magnetometer (VSM). Specifically, measurement was performed at 23°C with TM-VSM1530-HGC-D, manufactured by TAMAKAWA CO., LTD. The scanning speed was 200 Oe/s, and the scanning range was 1.5 T. 0.07 g of particles ($BiFeO_3$ particles in Example 1) or 0.15 g of particles ($Bi_2Fe_4O_9$ particles in Example 2) were placed in a $\varphi$ 5 mm epoxy sample holder for VSM evaluation.
(a) of FIG. 8 is a J-H curve of Ni particles to be a reference, (b) is a J-H curve of $BiFeO_3$ particles of Example 1, (c) is a J-H curve of $Bi_2Fe_4O_9$ particles of Example 2, and (d) is a J-H curve of $BiFeO_3$ particles of Comparative Example 1. Similarly to (a), hysteresis loops were also observed in (b), (c), and (d), and it was confirmed that they were ferromagnetic.

Water Contact Angle Measurement Method (Confirmation of Superhydrophilicity)

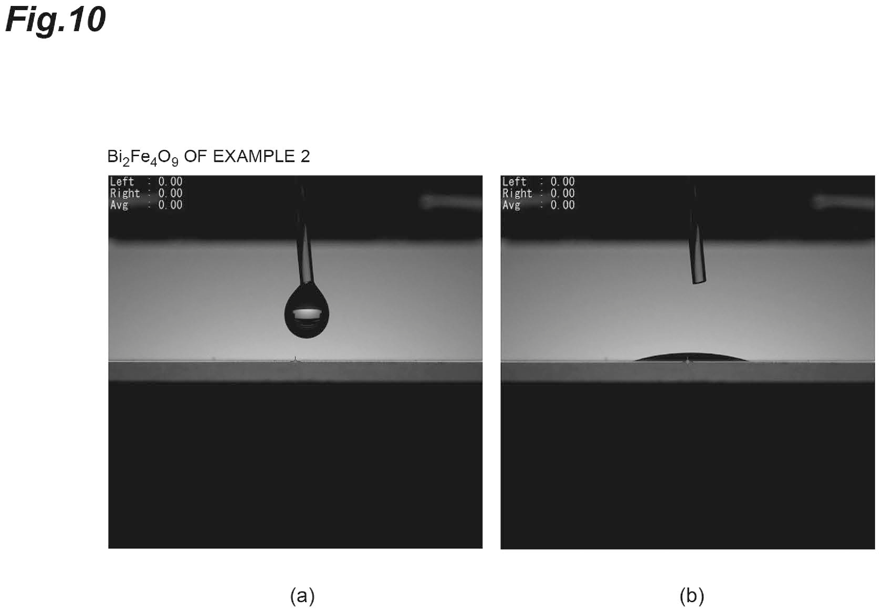

The water contact angles of the $BiFeO_3$ particles of Example 1 and the $Bi_2Fe_4O_9$ particles of Example 2 were measured using an automatic contact angle measuring device (SImage AUTO 100, Excimer, Inc.). First, about 20 mg of particles were placed on a glass substrate, and the particle layer was made flat while a part of the region was completely covered with a layer of $BiFeO_3$ particles or $Bi_2Fe_4O_9$ particles. A volume of 5 $\mu$L of water droplet was distributed in the region completely covered with the particle layer of $BiFeO_3$ particles or $Bi_2Fe_4O_9$ particles. Next, a side photographic image of the droplet was acquired. The acquired image was then analyzed to quantify the contact angle by software incorporated into the contact angle measuring device.

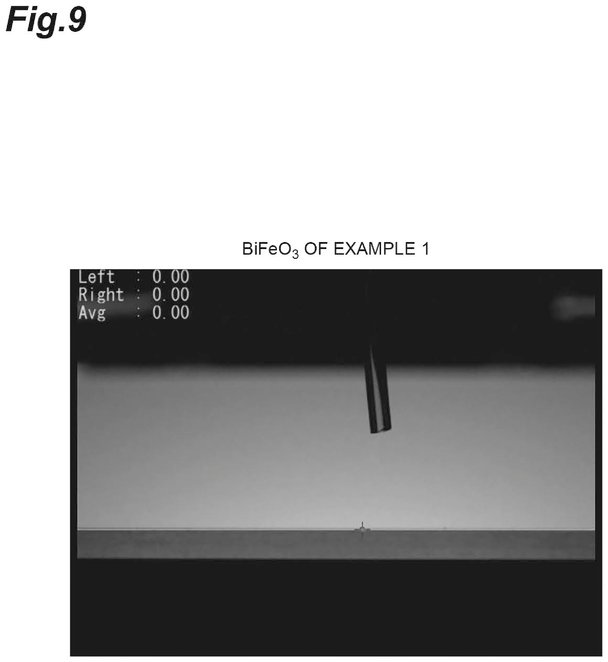

FIG. 9 is a photograph after dropping a droplet of water in the case of the $BiFeO_3$ particle layer of Example 1.
(a) and (b) of FIG. 10 are, in order, photographs before and after dropping a droplet in the case of the $Bi_2Fe_4O_9$ particle layer of Example 2.
The contact angle of the $BiFeO_3$ particles of Example 1 was 10° or less, and the contact angle of the $Bi_2Fe_4O_9$ particles of Example 2 was 10° or less.

(Measurement of Aspect Ratio and Particle Size of Crystal Grains Constituting Polycrystalline Particles)

The aspect ratio and the particle size of 100 crystal grains were determined from an SEM image obtained by photographing the polycrystalline particles, and the arithmetic average of the aspect ratios, the coefficient of variation of the aspect ratio, the average particle size, and the coefficient of variation of the particle size were measured according to the above definitions. The results of Example 1, Example 2, and Comparative Example 1 are shown in Table 1.

[Table 1]

| Table 1 | | Example 1 | Example 2 | Comparative Example 1 |
|---|---|---|---|---|
| Aspect ratio r of crystal grain | Arithmetic average rav | 2.66 | 4.35 | 1.10 |
| | Standard deviation rsd | 1.65 | 1.52 | 0.07 |
| | Coefficient of variation rcv | 0.62 | 0.35 | 0.06 |
| Particle size of crystal grain | Average particle size (nm) | 298.8 | 377.1 | 1176.4 |
| | Standard deviation (nm) | 138.8 | 135.2 | 249.2 |
| | Coefficient of variation | 0.46 | 0.36 | 0.21 |

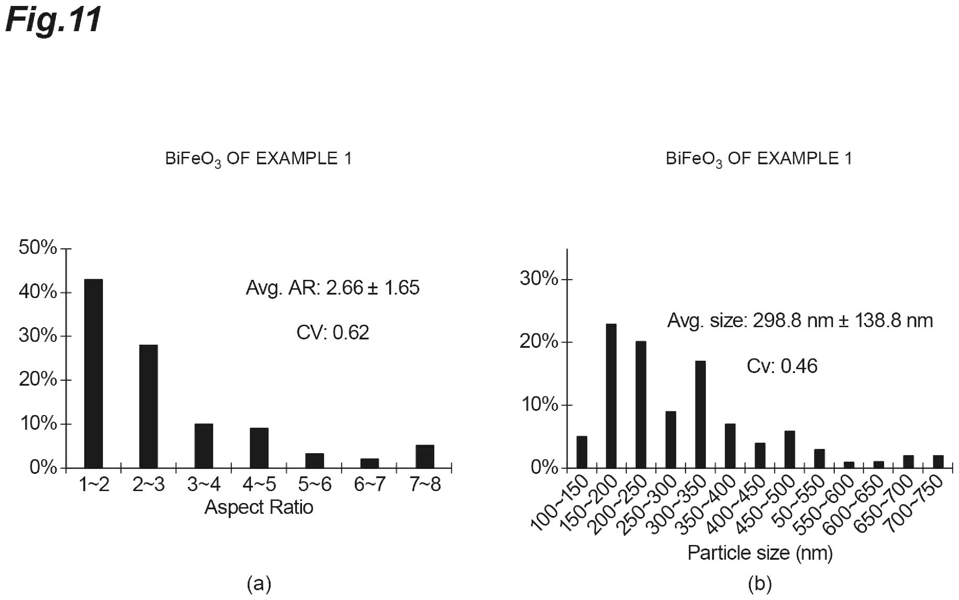

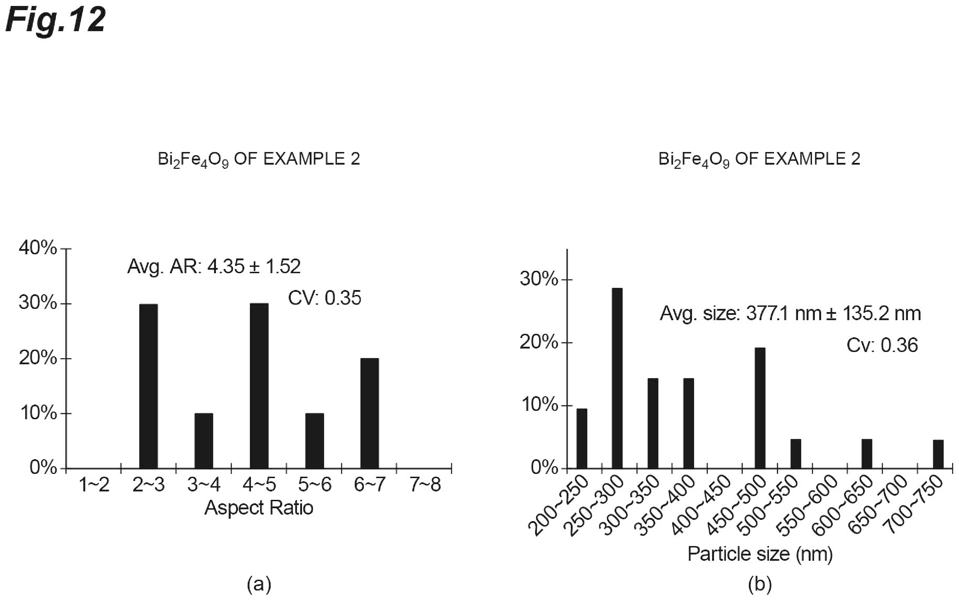

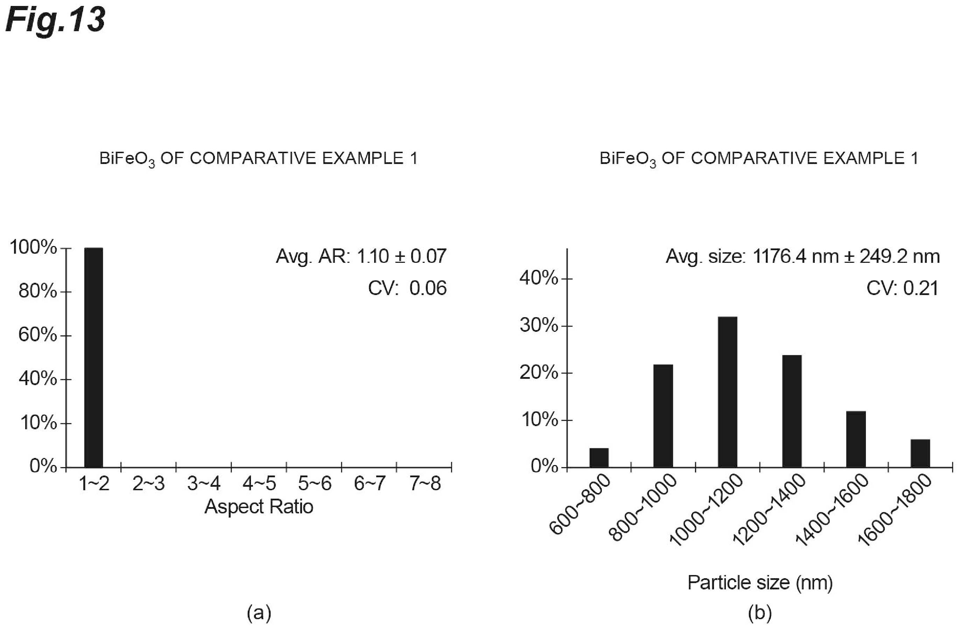

A graph showing a histogram of the aspect ratio of the crystal grains of the polycrystalline particles of Example 1 is shown in (a) of FIG. 11, and a graph showing a histogram of the particle size of crystal grains of the polycrystalline particles of Example 1 is shown in (b) of FIG. 11.
A histogram of the aspect ratio of the crystal grains of the polycrystalline particles of Example 2 is shown in (a) of FIG. 12, and a histogram of the particle size of the crystal grains of the polycrystalline particles of Example 2 is shown in (b) of FIG. 12.
A histogram of the aspect ratio of the crystal grains of the polycrystalline particles of Comparative Example 1 is shown in (a) of FIG. 13, and a histogram of the particle size of the crystal grains of the polycrystalline particles of Comparative Example 1 is shown in (b) of FIG. 13.

(Example 3) Preparation of $BiFeO_3$ Polycrystalline Particles of Example 1 Supporting Au Particles

60 mg of $BiFeO_3$ particles obtained in the same manner as in Example 1 were dispersed in a solution containing 30 mL of deionized water and 15 mL of ethanol, followed by addition of 600 $\mu$L of 1M NaOH solution. Ethanol was used as a reducing agent to promote Au deposition on $BiFeO_3$. After the slurry was heated to 50°C, 150 to 750 $\mu$L of 10 mM $HAuCl_4$ solution was added, and the amount of Au decorated on $BiFeO_3$ was adjusted. The solution was held at 50°C for 3 hours. The Au particle-supported $BiFeO_3$ polycrystalline particles were centrifuged, washed with deionized water and ethanol, and then dried at 80°C in an oven for later use. The Au content was evaluated with an energy dispersive X-ray analyzer (EDX, EMAX EX-250, HORIBA) equipped with a scanning electron microscope (SEM, S-4300 SE, Hitachi).

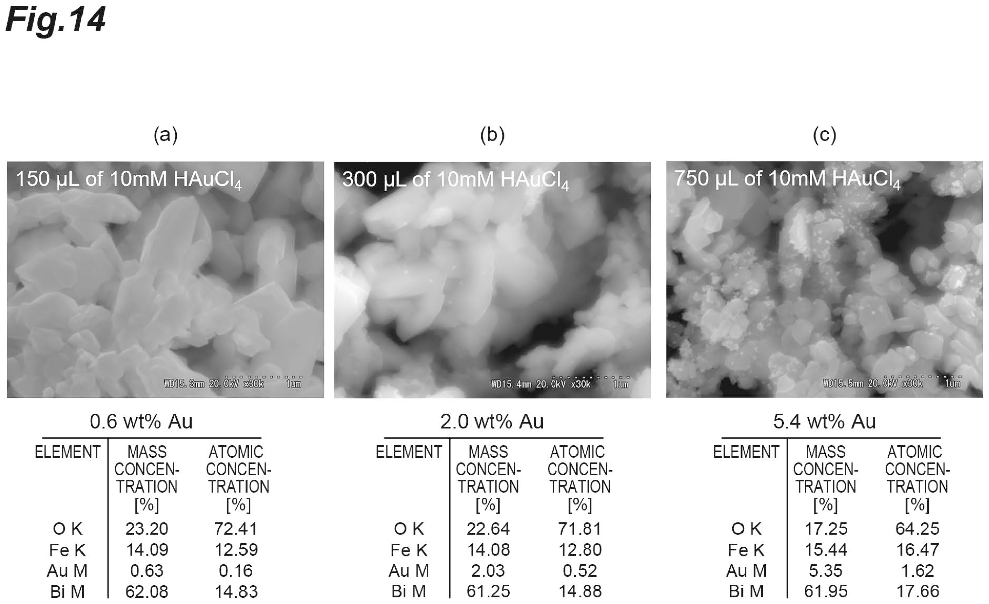

SEM photographs and results of elemental analysis in the cases where the Au loading amount of the $BiFeO_3$ polycrystalline particles of Example 1 supporting Au particles is 0.6 wt%, 2.0 wt%, and 5.4 wt% are shown in (a), (b), and (c) of FIG. 14 in order.

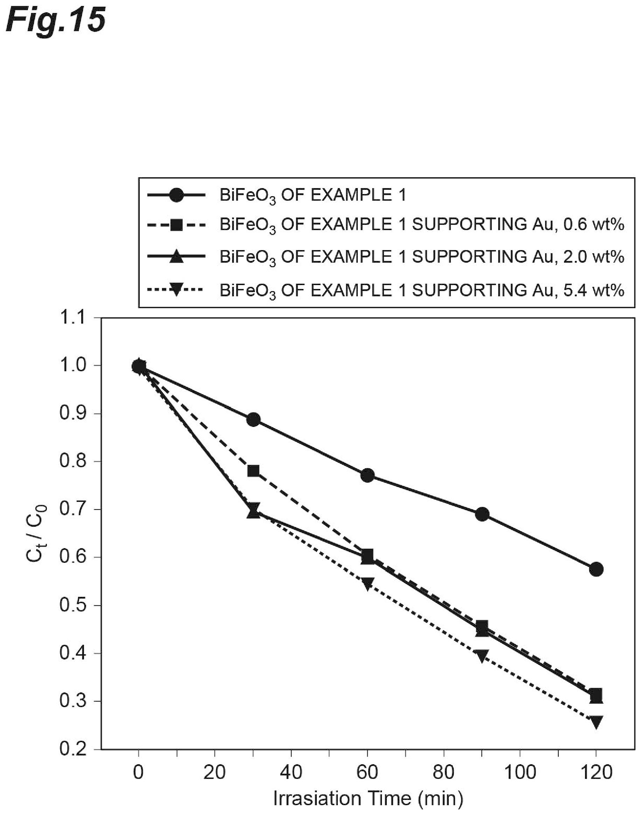

FIG. 15 is a graph comparing the MB decomposition activities of the $BiFeO_3$ polycrystalline particles of Example 1 supporting Au particles in the cases where the Au loading amount is 0.6 wt%, 2.0 wt%, and 5.4 wt% with that of the $BiFeO_3$ polycrystalline particles of Example 1 in which the Au loading amount is 0. The procedure is similar to that described above. The particles supporting Au particles had further improved photocatalytic activity.

(Recovery of Photocatalyst Particles by Magnetic Force)

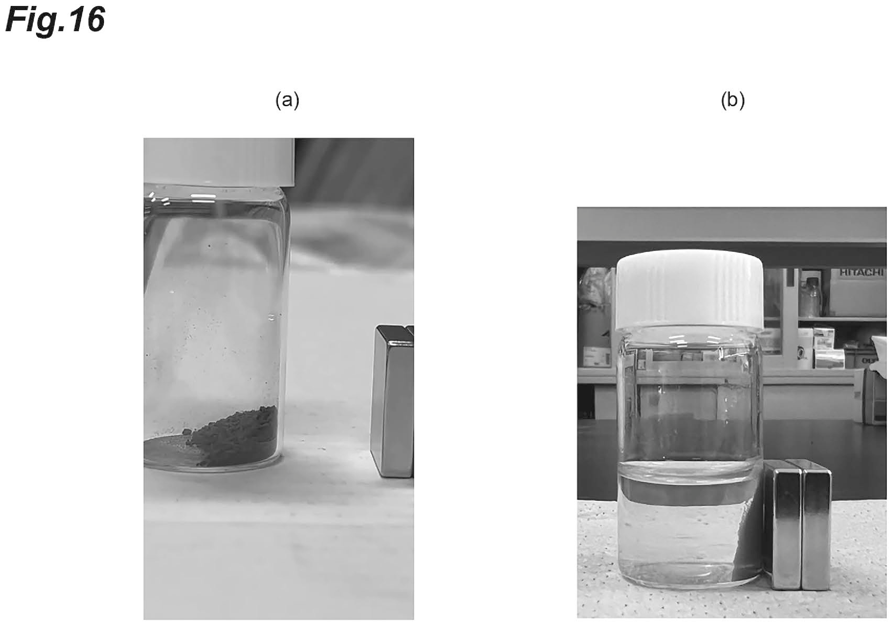

(1) About 20 mg of the $BiFeO_3$ polycrystalline particles of Example 1 supporting Au particles were placed in a 10 mm $\varphi$ glass container. The particles in the glass container were clearly attracted to the side of the inner wall when a neodymium magnet (model: TN22-21K-1P, dimension: 22 mm $\times$ 21 mm $\times$ 5 mm, magnetic attractive force: 70.56 N, manufactured by TRUSCO NAKAYAMA CORPORATION) was placed in proximity to the glass container. A photograph at that time is shown in FIG. 16(a).

(2) Pure water was added to the glass container having the $BiFeO_3$ polycrystalline particles of Example 1 supporting Au particles, and the water level was set to 20 mm. To ensure uniform distribution of the $BiFeO_3$ polycrystalline particles of Example 1 supporting Au particles in the solution, the mixture was placed in an ultrasonic homogenizer. Next, a neodymium magnet was placed near the glass container. At the moment when the neodymium magnet came into contact with the glass container, some $BiFeO_3$ polycrystalline particles of Example 1 supporting Au particles were immediately attracted to the side of the inner wall. After the disposition of the magnet was maintained for 15 minutes, a large amount of the $BiFeO_3$ polycrystalline particles of Example 1 supporting Au particles were attracted to the inner wall on the side close to the neodymium magnet, and the solution became transparent. A photograph at that time is shown in FIG. 16(b).

[Appendix]

The photocatalyst particles according to the present disclosure can have photocatalytic ability in visible light, and have higher energy efficiency than existing photocatalysts such as titanium oxide. Therefore, it is possible to contribute to Goal 9 of sustainable development goals (SDGs) led by the United Nations.

-    Goal 9: "Industry, Innovation and Infrastructure"

**Claims**

1.    Photocatalyst particles comprising polycrystalline particles of an oxide selected from the group consisting of $MFeO_3$, $M_2Fe_4O_9$, and $M_{25}FeO_{39}$ (wherein M is at least one selected from the group consisting of Bi, Ga, Ni, Co, and Zn), wherein
a coefficient of variation of an aspect ratio of crystal grains constituting the polycrystalline particles is 0.35 to 1.0.

2.    The photocatalyst particles according to claim 1, wherein a coefficient of variation of a particle size of the crystal grains is 0.35 to 1.0.

3.    The photocatalyst particles according to claim 1 or 2, wherein an arithmetic average of the aspect ratio of the crystal grains is 1.90 to 10.0.

4.    The photocatalyst particles according to claim 1 or 2, further comprising metal particles of at least one selected from the group consisting of Au, Pd, Ag, and Pt, the metal particles being supported on a surface of the polycrystalline particles.

5. A method for producing photocatalyst particles, comprising a step of heating a solution of a salt of at least one metal selected from the group consisting of Bi, Ga, Ni, Co, and Zn and a salt of Fe to obtain polycrystalline particles of an oxide selected from the group consisting of $MFeO_3$, $M_2Fe_4O_9$, and $M_{25}FeO_{39}$ (wherein M is at least one selected from the group consisting of Bi, Ga, Ni, Co, and Zn).

6. The method according to claim 5, further comprising a step of supporting metal particles of at least one selected from the group consisting of Au, Pd, Ag, and Pt on a surface of the obtained polycrystalline particles.

7. A method for recovering photocatalyst particles, comprising a step of recovering the photocatalyst particles from a composition containing the photocatalyst particles according to claim 1 or 2 with a magnet.

*Fig.1*

Fig.2

# Fig.3

BiFeO$_3$ OF EXAMPLE 1

# Fig.4

Bi$_2$Fe$_4$O$_9$ OF EXAMPLE 2

# Fig.5

BiFeO$_3$ OF COMPARATIVE EXAMPLE 1

**Fig.6**

(a)

(b)

# Fig.7

Fig.8

# *Fig.9*

BiFeO$_3$ OF EXAMPLE 1

EP 4 759 408 A1

## Fig.10

Bi$_2$Fe$_4$O$_9$ OF EXAMPLE 2

(a)  (b)

**Fig.11**

BiFeO$_3$ OF EXAMPLE 1

Avg. AR: 2.66 ± 1.65

CV: 0.62

(a)

BiFeO$_3$ OF EXAMPLE 1

Avg. size: 298.8 nm ± 138.8 nm

Cv: 0.46

(b)

EP 4 759 408 A1

## Fig.12

(a) Bi$_2$Fe$_4$O$_9$ OF EXAMPLE 2 — Avg. AR: 4.35 ± 1.52, CV: 0.35, Aspect Ratio

(b) Bi$_2$Fe$_4$O$_9$ OF EXAMPLE 2 — Avg. size: 377.1 nm ± 135.2 nm, Cv: 0.36, Particle size (nm)

EP 4 759 408 A1

# Fig.13

BiFeO$_3$ OF COMPARATIVE EXAMPLE 1

Avg. AR: 1.10 ± 0.07
CV: 0.06

(a)

BiFeO$_3$ OF COMPARATIVE EXAMPLE 1

Avg. size: 1176.4 nm ± 249.2 nm
CV: 0.21

(b)

EP 4 759 408 A1

**Fig.14**

EP 4 759 408 A1

|                | (a) | (b) | (c) |

150 μL of 10mM HAuCl$_4$  •  300 μL of 10mM HAuCl$_4$  •  750 μL of 10mM HAuCl$_4$

0.6 wt% Au

| ELEMENT | MASS CONCEN-TRATION [%] | ATOMIC CONCEN-TRATION [%] |
|---------|-------------------------|---------------------------|
| O K | 23.20 | 72.41 |
| Fe K | 14.09 | 12.59 |
| Au M | 0.63 | 0.16 |
| Bi M | 62.08 | 14.83 |

2.0 wt% Au

| ELEMENT | MASS CONCEN-TRATION [%] | ATOMIC CONCEN-TRATION [%] |
|---------|-------------------------|---------------------------|
| O K | 22.64 | 71.81 |
| Fe K | 14.08 | 12.80 |
| Au M | 2.03 | 0.52 |
| Bi M | 61.25 | 14.88 |

5.4 wt% Au

| ELEMENT | MASS CONCEN-TRATION [%] | ATOMIC CONCEN-TRATION [%] |
|---------|-------------------------|---------------------------|
| O K | 17.25 | 64.25 |
| Fe K | 15.44 | 16.47 |
| Au M | 5.35 | 1.62 |
| Bi M | 61.95 | 17.66 |

# *Fig.15*

*Fig.16*

(a)

(b)

## INTERNATIONAL SEARCH REPORT

| International application No. |
|---|
| **PCT/JP2024/034249** |

**A. CLASSIFICATION OF SUBJECT MATTER**

***B01J 35/39***(2024.01)i; ***B01J 23/89***(2006.01)i; ***B01J 23/94***(2006.01)i; ***B01J 23/96***(2006.01)i; ***B01J 23/843***(2006.01)i; ***B01J 37/02***(2006.01)i; ***B01J 37/10***(2006.01)i; ***B01J 38/72***(2006.01)i

FI: B01J35/39; B01J37/10; B01J37/02 101Z; B01J38/72; B01J23/843 M; B01J23/94 M; B01J23/96 M; B01J23/89 M

According to International Patent Classification (IPC) or to both national classification and IPC

**B. FIELDS SEARCHED**

Minimum documentation searched (classification system followed by classification symbols)

B01J21/00-38/74

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WANG, Huanchun et al. Visible Light Photocatalytic Activity of Bismuth Ferrites Tuned by Bi/Fe Ratio. Journal of the American Ceramic Society. 2016, vol. 99(4), pp. 1133-1136, DOI:10.1111/jace.14113 <br> abstract, II(1), III, fig. 1-3 | 5 |
| Y | | 6 |
| A | | 1-4, 7 |
| X | WEI, Jie et al. Low-temperature hydrothermal synthesis of BiFeO3 microcrystals and their visible-light photocatalytic activity. Materials Research Bulletin. 2012, vol. 47, pp. 3513-3517, DOI:10.1016/j.materresbull.2012.06.068 <br> abstract, 2., 3., fig. 1-5, table 1 | 5 |
| Y | | 6 |
| A | | 1-4, 7 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **05 December 2024** | **17 December 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT

International application No.

**PCT/JP2024/034249**

### C. DOCUMENTS CONSIDERED TO BE RELEVANT

| Category* | Citation of document, with indication, where appropriate, of the relevant passages | Relevant to claim No. |
|---|---|---|
| X | CN 105772003 A (CHINA JILIANG UNIVERSITY) 20 July 2016 (2016-07-20) claim 1, examples 4, 5, fig. 1-3 | 5 |
| Y | | 6 |
| A | | 1-4, 7 |
| Y | CN 104941662 A (GUILIN UNIVERSITY OF TECHNOLOGY) 30 September 2015 (2015-09-30) claim 1, paragraphs [0003]-[0004], example 1 | 6 |
| Y | CN 104646001 A (SUN YAT-SEN UNIVERSITY) 27 May 2015 (2015-05-27) paragraph [0004] | 6 |
| A | CN 108114736 A (ZHEJIANG UNIVERSITY OF TECHNOLOGY) 05 June 2018 (2018-06-05) claim 1, paragraphs [0042]-[0043] | 1-7 |

Form PCT/ISA/210 (second sheet) (July 2022)

## INTERNATIONAL SEARCH REPORT

| International application No. |
| --- |
| **PCT/JP2024/034249** |

**Box No. III      Observations where unity of invention is lacking (Continuation of item 3 of first sheet)**

This International Searching Authority found multiple inventions in this international application, as follows:

Claims are classified into the following two inventions.
(Invention 1) Claims 1-4 and 7
    Claims 1-4 and 7 have the special technical feature of a photocatalytic particle comprising polycrystalline particles of an oxide selected from the group consisting of $MFeO_3$, $M_2Fe_4O_9$, and $M_{25}FeO_{39}$ (here, M is at least one selected from the group consisting of Bi, Ga, Ni, Co, and Zn), "the variation coefficient of the aspect ratio of the crystal particles constituting the polycrystalline particles is 0.35 to 1.0," and are thus classified as invention 1.

(Invention 2) Claims 5 and 6
    Claims 5 and 6 shares, with claim 1 classified as invention 1, the common technical feature of a "photocatalytic particles comprising polycrystalline particles (here, the M is at least one selected from the group consisting of Bi, Ga, Ni, Co, and Zn) of an oxide selected from the group consisting of $MFeO_3$, $M_2Fe_4O_9$, and $M_{25}FeO_{39}$." However, the technical feature does not make a contribution over the prior art in light of the disclosure of document 1(WANG, Huanchun et al. Visible Light Photocatalytic Activity of Bismuth Ferrites Tuned by Bi/Fe Ratio. Journal of the American Ceramic Society. 2016, vol. 99(4), pp. 1133-1136, DOI:10.1111/jace.14113 (see abstract, II(1), III, fig. 1-3, etc.), and thus cannot be said to be a special technical feature. Also, there are no other the same as or corresponding special technical features between these inventions. In addition, claims 5 and 6 are not dependent on claim 1, and are not substantially identical to or similarly closely related to any of the claims classified as invention 1. Thus, claims 5 and 6 cannot be classified as invention 1.
    Also, claim 5 lacks novelty in light of document 1 and thus does not have a special technical feature.
    Thus, claims 5 and claim 6 referring to claim 5 are classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  
☐ The additional search fees were accompanied by the applicant's protest and, where applicable, the payment of a protest fee.  
☐ The additional search fees were accompanied by the applicant's protest but the applicable protest fee was not paid within the time limit specified in the invitation.  
☐ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2024/034249**

| Patent document cited in search report | | | Publication date (day/month/year) | Patent family member(s) | Publication date (day/month/year) |
|---|---|---|---|---|---|
| CN | 105772003 | A | 20 July 2016 | (Family: none) | |
| CN | 104941662 | A | 30 September 2015 | (Family: none) | |
| CN | 104646001 | A | 27 May 2015 | (Family: none) | |
| CN | 108114736 | A | 05 June 2018 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104646001
- CN 104941662
- CN 106807400
- CN 108114736